# EUROPEAN PATENT SPECIFICATION

(11) **EP 1 875 279 B1**
(45) Date of publication and mention of the grant of the patent: **02.07.2008**
(21) Application number: 06710073.5
(22) Date of filing: 13.03.2006
(51) Int. Cl.: G02B 5/08, C25D 7/08, C25D 5/54

(54) **A METHOD OF FORMING MIRRORS ON A CONDUCTING SUBSTRATE**
VERFAHREN ZUR BILDUNG VON SPIEGELN AUF EINEM LEITFÄHIGEN SUBSTRAT
PROCÉDÉ DE FORMATION DE MIROIRS SUR UN SUBSTRAT CONDUCTEUR

(30) Priority: 23.04.2005 GB 0508235
(43) Date of publication of application: 09.01.2008
(73) Proprietor: Eastman Kodak Company, Rochester, New York 14650-2201 (US)
(72) Inventor: FYSON, John "Tortworth", Hackney London E9 7AS (GB); RIDER, Christopher, Surrey KT3 3AP (GB)
(74) Representative: Lee, Brenda
(86) International application number: PCT/GB2006/000883
(87) International publication number: WO 2006/114564

(56) References cited:
- EP-A- 0 352 721
- US-A- 4 463 089
- US-A- 4 586 988
- US-B1- 6 366 333

## Description

### FIELD OF THE INVENTION

This invention relates to the field of manufacturing mirrors on conducting transparent substrates.

### BACKGROUND OF THE INVENTION

Digital pixelated non-emissive displays require conductive tracks running to the electrodes at every pixel to address the display. The display can be transparent and lit from behind or rely on a reflector on one side, using ambient light to view the device. In the case of displays which are illuminated from behind, the tracks carrying the current must be substantially transparent over the viewing area and may be made of an organic conductor such as polythiophene, a derivative of polythiophene which may be mixed with other components or an inorganic conductor such as indium tin oxide (ITO). The track and electrode pattern may be formed in any suitable manner such as photolithography and then etched with a suitable etchant. However, these 'conductive' materials have a relatively large resistance when used to form transparent conductors and this resistance will impair the operation of a display, especially if the display is large.

A means of overcoming this is to put a conducting metal over part of these tracks to reduce the resistance. This reduces the light passing through the pixels. The area covered by the metal is kept to a minimum. If the display is backlit, the effect of the metal conductors can be partially overcome by making them reflective. Any light hitting the metal conductor would then be reflected back into the light box or light guide instead of being absorbed.

In the case of a light box, it is necessary that the metal conductor be highly reflective but not necessarily highly specular. However, to reduce the thickness of the display, especially for example in portable high resolution displays, it is common practice to use edge lighting of a planar waveguide structure which is designed to leak some of the light from one side of the light-guide and uniformly illuminate the display. In this case, it is important that the reflection from the metal conductor be specular to avoid breaking the waveguiding conditions and causing light leakage that would reduce both the efficiency and the uniformity of the backlight. Therefore, a reflective metal conductor with a good mirror finish on the light box (base/substrate) side would be advantageous in both cases. This metal is often coated by vacuum deposition or sputtering and then subsequently etched. This process is slow and requires the formation of a good vacuum around the material. This puts a limit on the practical size of rigid transparent substrates such as glass or requires a rolled up flexible substrate to be rolled and unrolled within the vacuum.

US 4,586,988 discloses a means of depositing metals onto ITO and semi conducting materials using an electrolytic process. In this process the surface is dipped in a suitable plating solution and connected to the negative of a DC supply. An inert anode or one of the metals being plated is placed in the plating solution. A current is passed through the solution and metal is plated on the conducting surface. EP 0352721 teaches that metal plated in this way may not adhere well to the surface. This document teaches the use of a surfactant and air bubbling to create a foam to alleviate the problem.

To make a flexible display or other optical device it would be useful to use a photographic silver halide imaging system to write features onto the device. To this end silver halide in a binder, e.g. gelatin could be coated onto the conducting surface. This could subsequently be imaged as required. It has been found relatively easy to coat gelatin and emulsions onto a conducting ITO layer on glass or flexible PET (Estar^{™}) but more difficult to coat onto metal due to poor adhesion.

### PROBLEM TO BE SOLVED BY THE INVENTION

The invention aims to provide a method of producing a mirror under a layer of hydrophilic colloid onto a transparent conducting layer. The invention further aims to improve the robustness of the mirror and allow easy coating of a hydrophilic colloid layer on top of this.

### SUMMARY OF THE INVENTION

According to the present invention there is provided a method of forming at least one metal layer on a conductive substrate comprising;
coating a layer of hydrophilic colloid onto the conductive substrate,
placing the coated substrate in a plating solution, and passing current through the solution, thereby forming the metal layer between the layer of hydrophilic colloid and the conductive substrate.

### ADVANTAGEOUS EFFECT OF THE INVENTION

The invention has a number of advantages. No vacuum is required to deposit the metal layer and no high voltages are required in sputtering. There is no size restriction on the layers formed. The method of the invention leaves a gelatin/hydrophilic colloid onto which an emulsion can be coated easily. During formation of the mirror under the layer of hydrophilic colloid the conductance can be changed by changing the plating conditions, for example, the time, voltage, agitation etc..

### BRIEF DESCRIPTION OF THE DRAWINGS

The invention will now be described with reference to the accompanying drawings in which:
Figure 1 is a schematic view of the apparatus for performing the method of the invention;
Figure 2 illustrates the structure of the layers of a device produced by the method according to the invention; and
Figure 3 is a graph comparing the properties of a device manufactured in accordance with the invention with a device manufacture by conventional means.

### DETAILED DESCRIPTION OF THE INVENTION

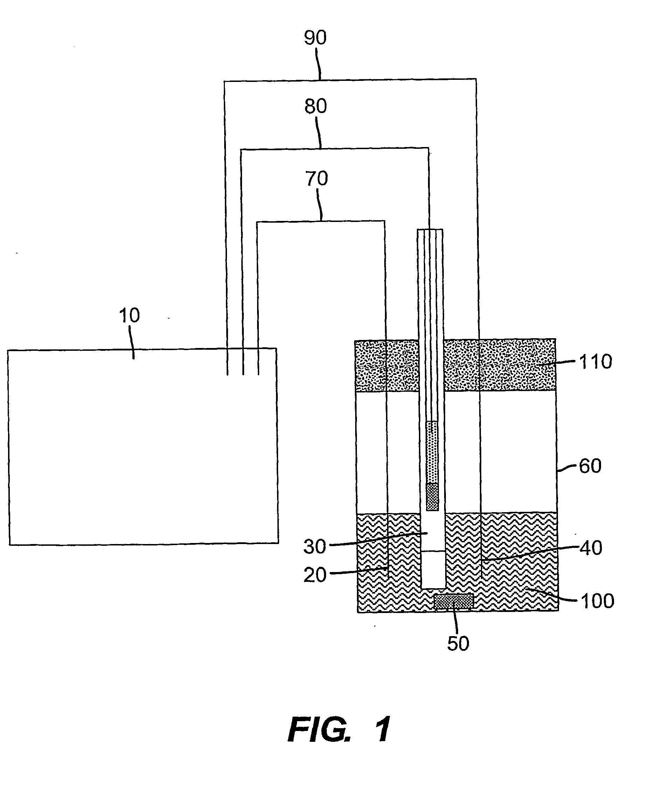

Figure 1 shows the apparatus for performing the method of the invention. A vessel 60 is partially filled with plating solution 100. The solution may be any suitable plating solution but for a good silver mirror a solution of a silver complex would be used. The vessel 60 is provided with a lid 110. This lid may be of rubber. Three electrodes 20, 30 and 40 are supported by the lid 110 and extend down into the solution 100. Each electrode is connected to potentiostat 10, by connecting wires.

Electrode 20 is the cathode. Electrode 20 is formed of a layer of conductive material 4 coated onto a transparent substrate 2. The substrate 2 may be flexible. The layer of conductive material may be indium tin oxide. However it will be understood by those skilled in the art that any suitable material may be used as the conductive layer, for example an organic conductor such as polythiophene, a derivative of polythiophene which may be mixed with other components. The transparent substrate may be, for example, PET, cellulose triacetate, PEN or glass. These are examples only. A layer of hydrophilic colloid or gel 8 is coated above the conductive layer 4. This layer is allowed to dry before the plating process takes place. Examples of the colloid are gelatin, polyvinyl pyrolidone (PVP) and polyvinyl alcohol (PVA). These are examples only and the invention is not limited to such colloids. Electrode 20 is connected to the potentiostat 10 by a connecting wire 70.

Electrode 30 forms a reference electrode. Electrode 30 is connected to the potentiostat 10 by a connecting wire 80.

Electrode 40 is a silver foil electrode and forms the anode. Electrode 40 is connected to the potentiostat 10 by a connecting wire 90.

A stirring device 50 is provided within the vessel 60.

To produce a mirror on a conducting transparent layer deposited on an insulating transparent support underneath a layer of a hydrophilic colloid the conducting layer is connected as the cathode in an electrolytic cell charged with an appropriate plating solution. Current is passed for such time that a mirror forms between the transparent conducting coating and the hydrophilic colloid.

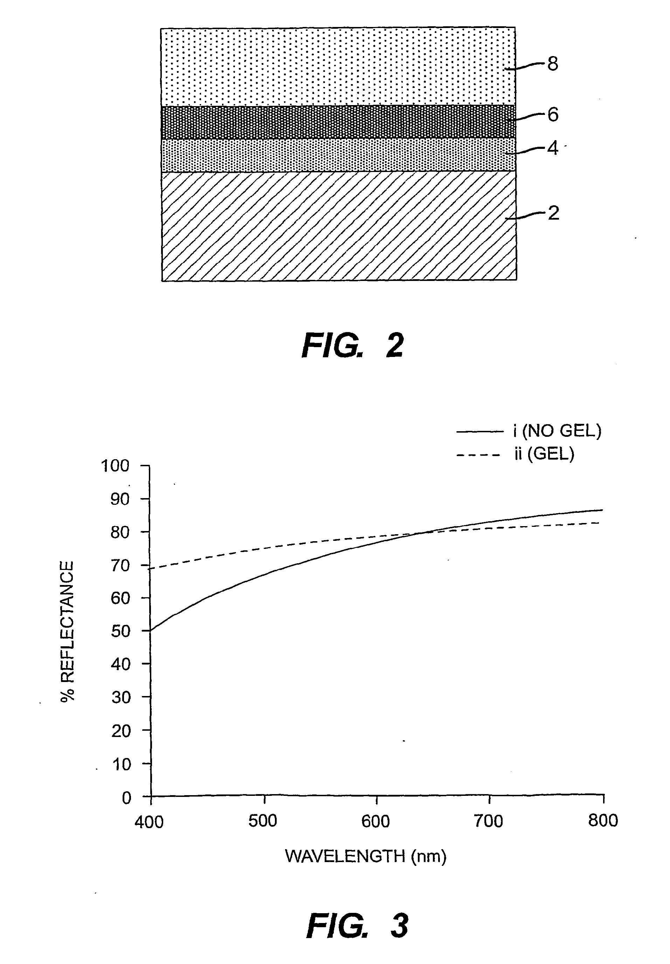

Figure 2 illustrates the structure of the mirrored coating after the method described above. As can be seen a layer of silver 6 has been formed between the transparent conductor 4 and the layer of hydrophilic colloid 8. Suitable metals other than silver include nickel, copper and gold. These are examples only.

An enabling embodiment of the invention is now described.
All examples used the same sample of indium tin oxide (ITO) coated flexible polyethylene teraphthalate sheet of about 175microns thickness. The resistivity was measured to be about 400ohms/square.
Four samples of ITO coating were prepared:
i) no further treatment
ii) 10% gelatin, with 0.1% Triton X-100 as coating aid, blade coated onto the ITO layer to a wet thickness of 80 microns giving a laydown of 8g/m2 gelatin.
iii) 10% gelatin to which formaldehyde solution (formalin) was added to give a solution concentration of 0.04% was blade coated as in ii). This coating was allowed to stand at 20°C overnight before use. This gives a hardened coating.
iv) as in iii) but with 0.4% formaldehyde added. This gave a 'harder' coating.

A standard 3-electrode electrochemical cell was set up as shown in Figure 1. A three-electrode arrangement was used to keep track of the voltage on the working electrode, 20 and the current flowing between the working electrode 20 and auxiliary electrode 40.

A 10×50mm strip of ITO coating, supported by a rubber lid, 110, was connected with a crocodile clip (not shown), squashed together to ensure good contact with the ITO through any coating, to a potentiostat (Bruker^{™}) via a wire, 70, as the working electrode. A length of 20mm of this coating was immersed in the plating liquid, 100, in the beaker, 60. Similarly a calomel reference (Corning^{™}) electrode, 30, supported by the rubber lid, 110, was connected directly via its connecting wire, 80, to the potentiostat, 10, and was allowed to dip in the plating solution, 100, the depth being unimportant. A 20×100mm silver foil electrode was connected as the auxiliary electrode, again supported by the rubber lid, 110, via a crocodile clip (not shown) and wire, 80, to the potentiostat, 10. The potentiostat, 10, was set up to deliver constant voltage, but this was adjusted to maintain a more-or-less constant desired current, where possible. The plating solution, 100, was stirred by means of an external magnetic stirrer coupled through a stirrer bar, 50.
The plating solution was as follows:

| | |
|---|---|
| ammonium thiosulfate | 0.02molar |
| sodium sulfite | 0.01molar |
| silver chloride | 0.01molar |

The current was set as 1mA (50µA/mm²). The average voltage applied to the electrode was recorded. After 10 minutes the current flowing through the cell was switched off, the now plated ITO coating removed from the cell and washed under the tap with water and then allowed to dry at room temperature. The mirror was looked at through the transparent base and its quality determined by visual observation. Its robustness was determined by rubbing gently with a finger.
The following table is a summary of the results:

| Exp ID | ITO voltage | Mirror quality | Effect of gentle rubbing |
|---|---|---|---|
| i (comp) | 1.09 | good | mirror rubbed off |
| ii (inv.) | 1.20 | excellent | mirror remained |
| iii (inv.) | 1.22 | excellent | mirror remained |
| iv (inv.) | 1.24 | excellent | mirror remained |

This experiment demonstrated that a mirror, a good reflective surface when viewed through the base, could be made by electrolysis through a gel layer that may or may not be hardened onto a conductive layer on a transparent support. The mirror formed in this way was as good if not better than one formed without the gel. The mirror under the gel was also robust to abrasion.

To test to see if gel could be coated onto these samples a layer of gel was coated on to these using the following technique.

The samples obtained above were taped to a coating block covering up the smallest area of the mirror possible. The tape was 80 micron thick. This was used as the edge rails for a coating knife (glass slide). Onto the sample was coated the same gelatin solution as used in sample ii) described above. The coatings were allowed to dry. The gelatin peeled off the sample without gel cover (sample i described above) but not from the other samples.

This demonstrates that further layers of gelatin can be coated on top of mirrors grown under gelatin with no added treatment.

The experiment was repeated with coatings i and ii using a larger area of 30x30mm in the plating solution and using the same current density of 50µA/mm². The specular reflectivity at different wavelengths was measured at different wave lengths. Figure 3 shows the results. The reflectivity of the mirror formed under gelatin is more colour neutral and has a larger area under the curve indicating the overall specular reflectance is greater.

The invention has been described in detail with reference to preferred embodiments thereof. It will be understood by those skilled in the art that variations and modifications can be effected within the scope of the invention.

## Claims

1. A method of forming at least one metal layer (6) on a conductive substrate (2,4) comprising;
coating a layer of hydrophilic colloid (8) onto the conductive substrate (2,4),
placing the coated substrate in a plating solution (100), and passing current through the solution (100), thereby forming the metal layer (6) between the layer of hydrophilic colloid (8) and the conductive substrate (2,4).

2. A method as claimed in claim 1 wherein the conductive substrate comprises a conductive layer (4) coated on a flexible support (2).

3. A method as claimed in claim 1 or 2 wherein the conductive substrate (2,4) is patterned, all parts of the pattern being at least temporarily connected.

4. A method as claimed in claim 1, 2 or 3 wherein the conductive substrate (2,4) is formed of a transparent material.

5. A method as claimed in any preceding claim wherein the conductive substrate (2,4) is formed of indium tin oxide.

6. A method as claimed in any preceding claim wherein the coated substrate is placed in a silver plating solution (100).

## Patentansprüche

1. Verfahren zum Ausbilden mindestens einer Metallschicht (6) auf einem leitfähigen Substrat (2, 4), mit den Schritten:
Aufbringen einer Schicht aus hydrophilem Kolloid (8) auf das leitfähige Substrat (2, 4),
Einbringen des beschichteten Substrats in eine Beschichtungslösung (100) und Durchlassen von Strom durch die Lösung (100), wobei die Metallschicht (6) zwischen der Schicht aus hydrophilem Kolloid (8) und dem leitfähigen Substrat (2, 4) ausgebildet wird.

2. Verfahren nach Anspruch 1, worin das leitfähige Substrat eine leitfähige Schicht (4) aufweist, die auf einen flexiblen Träger (2) aufgebracht ist.

3. Verfahren nach Anspruch 1 oder 2, worin das leitfähige Substrat (2, 4) mit einem Muster versehen ist, wobei alle Teile des Musters zumindest zeitweise verbunden sind.

4. Verfahren nach Anspruch 1, 2 oder 3, worin das leitfähige Substrat (2, 4) aus einem transparenten Material besteht.

5. Verfahren nach einem der vorhergehenden Ansprüche, worin das leitfähige Substrat (2, 4) aus Indiumzinnoxid besteht.

6. Verfahren nach einem der vorhergehenden Ansprüche, worin das beschichtete Substrat in eine Silberbeschichtungslösung (100) eingebracht wird.

## Revendications

1. Procédé de formation d'au moins une couche métallique (6) sur un substrat conducteur (2, 4) consistant à :
appliquer une couche de colloïde hydrophile (8) sur le substrat conducteur (2, 4),
placer le substrat revêtu dans une solution de placage (100) et faire passer le courant à travers la solution (100), ce qui permet de former la couche métallique (6) entre la couche de colloïde hydrophile (8) et le substrat conducteur (2, 4).

2. Procédé selon la revendication 1, dans lequel le substrat conducteur renferme une couche conductrice (4) appliquée sur un support flexible (2).

3. Procédé selon la revendication 1 ou 2, dans lequel un motif est formé sur le substrat conducteur (2, 4), toutes les parties du motif étant au moins temporairement connectées.

4. Procédé selon la revendication 1, 2 ou 3, dans lequel le substrat conducteur (2, 4) est constitué d'un matériau transparent.

5. Procédé selon l'une quelconque des revendications précédentes, dans lequel le substrat conducteur (2, 4) est constitué d'oxyde d'étain et d'indium.

6. Procédé selon l'une quelconque des revendications précédentes, dans lequel le substrat revêtu est placé dans une solution de placage argentique (100).
